# EUROPEAN PATENT SPECIFICATION

(11) **EP 1 728 843 B1**
(45) Date of publication and mention of the grant of the patent: **08.04.2009**
(21) Application number: 06118911.4
(22) Date of filing: 12.12.2002
(51) Int. Cl.: C09K 8/68, C09K 8/62, C09K 8/12, C09K 8/24, C09K 8/40, E21B 17/00

(54) **Friction reducing composition and method**
Reibungsreduzierende Zusammensetzung und zugehöriges Verfahren
Composition et procédé pour réduire la friction

(30) Priority: 12.12.2001 US 339630 P; 27.08.2002 US 228875
(43) Date of publication of application: 06.12.2006
(62) Divisional of application: 02788095.4
(73) Proprietor: Clearwater International, L.L.C, Houston, Texas 77027 (US)
(72) Inventor: Schwartz Kevin, Mt. Lebanon, PA 15228 (US); Smith, Kevin, W., McMurray, PA 15317 (US); Chen, Shih-Ruey, T., Pittsburgh, PA 15237 (US)
(74) Representative: Brewer, Michael Robert

(56) References cited:
- US-A- 5 582 250
- DATABASE COMPENDEX [Online] ENGINEERING INFORMATION, INC., NEW YORK, NY, US; ASADI MAHMOUD ET AL: "Zero Shear Viscosity Determination of Fracturing Fluids: An Essential Parameter In Proppant Transport Characterizations" XP002404627 Database accession no. E2004168120883 & PROC SPE INT SYMP FORM DAMAGE CONTROL; PROCEEDINGS - SPE INTERNATIONAL SYMPOSIUM ON FORMATION DAMAGE CONTROL 2002, 2002, pages 525-534,

## Description

This invention relates to polymeric gel systems and their use in hydrocarbon recovery, as well as to gel plugs and pigs for pipeline use.

Micellar combinations of cationic or anionic polymers and oppositely charged surfactants are made preferably with C6-23 alcohols in proportions coordinated in aqueous media with the aid of Zeta Potential measurements. The resulting gels are useful in drilling and formation fracturing in hydrocarbon recovery, manifesting excellent proppant suspending properties in low concentrations of polymer and surfactant as compared to the prior art.

In particular, this application is directed to the use of such gels in pipeline cleaning and related processes in pipeline operation. The gels are useful in making gel plugs and pigs used for the separation of fluids in pipelines for various purposes.

In US Patent 5,169,441, Lauzon suggests the use of Zeta Potential for characterizing particulates such as pigments treated with cationic polymers. Lauzon's US Patent 5,846,308 describes the stabilization of a rosin dispersion for use as a sizing composition by treating it with a "cationic colloidal coacervate" which may include both a cationic polymer and an anionic surfactant; the finished sizing composition is to have a Zeta Potential of at least 20 millivolts. Poly(diallyldimethyl ammonium chloride), sometimes known as polyDADMAC, is the preferred cationic polymer. Also, Lauzon's US Patent 6,315,824 describes a similar coacervate stabilizing system used for hydrophobic non-rosin sizing agents, which may be liquid as well as solid. See also Lauzon's US Patent 4,507,210, which suggests a correlation of Zeta Potential to certain filtration properties in the treatment of shale and clay in hydrocarbon recovery; see also Engelmann et al in US Patent 5,196,401.

Other compositions comprising a cationic polymer and an anionic surfactant, often in high ratios of anionic surfactant to cationic polymer, may be found in Matz and LeMar US Patent 6,110,451, Verdicchio and Spilatro US Patent 4,948,576, and the shampoo and other personal care products described by Guskey et al in US Patent 6,297,203 and 6,221,817, Sako et al in US Patent 6,284,230, (which also describes betaines) Hoshowski et al in US Patent 5,137,715, and Snyder et al in US Patent 6,248,317.

Combinations of cationic polymers, betaines, and anionic surfactants may be inferred from the numerous combinations of materials that are possibly viscoelastic within the disclosure of Balzer in US Patent 5,956,502, dealing with compositions for use on the hair and skin. See also the combination of cationic polymer with anionic surfactants for use as an automatic dishwashing detergent, in Tartakovsky et al US Patent 6,281,180.

In the field of hydrocarbon recovery from the earth, formation fracturing fluids proposed by Zhang in Canadian patent 2,257,699 combine anionic surfactants such as sodium xylene sulfonate and cationic surfactants such as N, N, N, trimethyl-1-octadecammonium chloride to make a gel said to be viscoelastic. Carbon dioxide is added to similar combinations in Zhang's Canadian patent 2,257,697 to generate a foam. Borchardt et al, in US Patent 4,409,110, describe formation flooding compositions which may comprise cationic polymers and anionic surfactants. Numerous combinations of surfactants and other compounds are proposed by Dahayanake et al in US Patent 6,258,859 (WO 98/56497; PCT/US/12067). See also the compositions said to be viscoelastic and proposed for well treatment by Hughes et al in US Patent 6,232,274 and Jones et al in US Patent 6,194,356.

Also in the art of producing oil and gas from underground formations, it is known to add friction reducing compositions to the fracturing fluids, to conserve energy. As summarized in Persinski et al US Patent 3,768,565, "it is necessary to inject sufficient amounts of fracturing fluids ... in order to effectuate cracks or fractures in the subterranean formation. Pressures as high as 3000 to 10000 psi (20.7 to 68.9 MPa) measured at the surface are often required. Because of the large quantities of fluid needed, the high velocities required, and the general irregularities of the formation, it is difficult to obtain satisfactory results in many fracturing operations because of the energy loss." Column 1, lines 44-55. See also column 1, lines 14-32: "It is well known that in the movement of aqueous fluids through conduits, friction is encountered and hence energy is lost. This energy loss is apparent from the pressure drop obtained in moving the fluid through a given distance and is directly proportional to the velocity of the fluid. According to the well-known laws of fluid dynamics, as long as the critical Reynolds Number of a fluid medium flowing through a conduit is not exceeded, the fluid moves in laminae which are actually aligned along the conduit. Under these conditions of laminar flow, the energy loss is minimal. However, when the velocity is greatly increased, the critical Reynolds Number is exceeded and turbulence occurs. This turbulence represents the change from laminar to nonlaminar flow. In addition, turbulence is increased by any irregularities in the conduit or in the entering or exiting formation which will distort the flow pattern. An increase in turbulence causes an increase in the amount of energy lost through friction." Since these summaries were written in 1971, oil and gas production conditions and demands have further heightened the requirements for friction reducing additives for fracturing fluids. Various water-soluble polymers are suggested for friction reducing in the *Persinski patent as well as several others cited in it.* The reader may also be interested in the polymers used by Boothe et al in US Patent 3,868,328, Martin et al US Patent 3,943,060, Gayley et al US Patent 3,562,226, McClaflin et al US Patent 3,730,275, Griffin US Patent 4,153,066, McDonald et al US Patent 4,182,417, Teot et al US Patent 4,615,825, Karl US Patent 4,637,418, and Seheult et al US Patent 4,717,488.

Many of the materials used in the past for friction reduction require economically unattractive concentrations. Others are unattractive for various purposes because of their chemical reactivity. There remains a need for friction reducing materials which may be used at lower concentrations. Combinations of cationic polymers, betaines, and anionic surfactants may be inferred from the numerous combinations of materials that are possibly viscoelastic within the disclosure of Balzer in US Patent 5,956,502, dealing with compositions for use on the hair and skin. See also the combination of cationic polymer with anionic surfactants for use as an automatic dishwashing detergent, in Tartakovsky et al US Patent 6,281,180.

Mechanical devices known as pigs have been used to separate moving fluids in pipes. See, for example, Ross's US Patent 6,332,930. Byrd et al, in US Patent 4,767,603, describes the use of pigs: "In a fluid conducting system, articles referred to as 'pigs' are used to separate fluids moving through the system. For example, in a continuous polymer reactor system... pigs are used to separate different volumes of polymers that are moved through the tubing ... en route to being injected into a well during a tertiary hydrocarbon recovery operation.... The general purpose of a pig used in a fluid conducting system is to provide a movable fluid-sealing barrier between the fluids." Column 1, lines 13-31. Pigs and plugs made of various gels are disclosed in the following US patents, as examples: Onan et al 5,346 011 and 5,483,986, Purinton 4,537,700, 4,543,131 and 4,473,408, Bradley 6,076,278, Himes 5,346,339, and Broussard et al 4,252,456. Specific uses include pipeline cleaning, pipeline drying, separation of cementing compositions in well treatment, and others.

There remains a need for improved aqueous gel plugs and pigs; there is a particular need for a versatile gel suitable for a wide range of such uses.

According to a first aspect of the present invention, there is provided an aqueous gel characterised by comprising: a water-soluble polymer in an amount no greater than 1% by weight; an anionic surfactant; and a hydrophobic alcohol in an amount between 0.001% and 5% by weight; wherein the gel has at least one of (a) a zero shear viscosity of at least 45,000 at 80°F (26.7 °C) following the zero shear viscosity extrapolation procedure of Asadi, Conway and Barree in SPE 73755 or (b) a "10/100 20/40" settling rate result at 60 minutes of no more than 8 millimeters at 80°F (26.7 °C).

According to a second aspect of the present invention, there is provided a method of separating two portions of fluid for movement in a pipe characterised by comprising placing between said portions of fluid in said pipe an aqueous gel separating pig comprising: a water-soluble polymer in an amount no greater than 1% by weight; an anionic surfactant; and a hydrophobic alcohol in an amount between 0.001% and 5% by weight; wherein the gel has at least one of (a) a zero shear viscosity of at least 45,000 at 80°F (26.7 °C) following the zero shear viscosity extrapolation procedure of Asadi, Conway and Barree in SPE 73755 or (b) a "10/100 20/40" settling rate result at 60 minutes of no more than 8 millimeters at 80°F (26.7 °C).

Priority for this invention is claimed from US provisional application 60/339,630 filed December 12, 2001 entitled "Cationic Polymeric Coacervates." Our invention includes aqueous gels, gel-forming compositions, methods of making them, and their use in well treatment. This application is also related to application 10/228,875 filed August 27, 2002 which describes a polymeric gel system.

A composition is disclosed that comprises (a) a cationic or anionic polymer and (b) a lesser amount of an oppositely charged surfactant, in a ratio to provide a Zeta Potential of 20 millivolts or higher, or -20 millivolts or lower, and (c) a small amount of a hydrophobic alcohol having 6 to 23 carbon atoms. The composition will preferably also include a small amount of a gel promoter comprising one or more of (d) an amphoteric surfactant and/or (e) an amine oxide surfactant, while maintaining the same limits of Zeta Potential. We may call our composition a polymer coacervate because the viscosifying properties of the polymer are controlled in coacervate form - that is, the long chain cationic or anionic polymer and the smaller amount of oppositely charged surfactant act in the presence of the hydrophobic alcohol to form a singular phase distinguished by a characteristic Zeta Potential. This singular phase, under the prescribed Zeta Potential, is capable of imparting a significantly increased viscosity compared to other solutions of the same polymer at the same concentration, including such concentrations in the presence of higher and lower amounts of the same other additives or components.

The surfactant which is oppositely charged from the polymer is sometimes called herein the "counterionic surfactant." By this we mean a surfactant having a charge opposite that of the polymer.

Suitable cationic polymers include polyamines, quaternary derivatives of cellulose ethers, quaternary derivatives of guar, homopolymers and copolymers of at least 20 mole percent dimethyl diallyl ammonium chloride (DMDAAC), homopolymers and copolymers of methacrylamidopropyl trimethyl ammonium chloride (MAPTAC), homopolymers and copolymers of acrylamidopropyl trimethyl ammonium chloride (APTAC), homopolymers and copolymers of methacryloyloxyethyl trimethyl ammonium chloride (METAC), homopolymers and copolymers of acryloyloxyethyl trimethyl ammonium chloride (AETAC), homopolymers and copolymers of methacryloyloxyethyl trimethyl ammonium methyl sulfate (METAMS), and quaternary derivatives of starch.

Suitable cationic polymers include polyamines, quaternary derivatives of cellulose ethers, quaternary derivatives of guar, homopolymers and copolymers of at least 20 mole percent dimethyl diallyl ammonium chloride (DMDAAC), homopolymers and copolymers of methacrylamidopropyl trimethyl ammonium chloride (MAPTAC), homopolymers and copolymers of acrylamidopropyl trimethyl ammonium chloride (APTAC), homopolymers and copolymers of methacryloyloxyethyl trimethyl ammponium chloride (METAC), homopolymers and copolymers of acryloyloxyethyl trimethyl ammonium chloride (AETAC), homopolymers and copolymers of methacryloyloxyethyl trimethyl ammonium methyl sulfate (METAMS), and quaternary derivatives of starch.

Suitable anionic polymers include homopolymers and copolymers of acrylic acid (AA), homopolymers and copolymers of methacrylic acid (MAA), homopolymers and copolymers of 2-acrylamido-2-methylpropane sulfonic acid (AMPSA), homopolymers and copolymers of N-methacrylamidopropyl N,N-dimethyl amino acetic acid, N-acrylamidopropyl N,N-dimethyl amino acetic acid, N-methacryloyloxyethyl N,N-dimethyl amino acetic acid, and N-acryloyloxyethyl N,N-dimethyl amino acetic acid.

Anionic surfactants suitable for use with the cationic polymers include alkyl, aryl or alkyl aryl sulfates, alkyl, aryl or alkyl aryl carboxylates or alkyl, aryl or alkyl aryl sulfonates. Preferably, the alkyl moieties have about 1 to about 18 carbons, the aryl moieties have about 6 to about 12 carbons, and the alkyl aryl moieties have about 7 to about 30 carbons. Exemplary groups would be propyl, butyl, hexyl, decyl, dodecyl, phenyl, benzyl and linear or branched alkyl benzene derivatives of the carboxylates, sulfates and sulfonates. , Included are alkyl ether sulphates, alkaryl sulphonates, alkyl succinates, alkyl sulphosuccinates, N-alkoyl sarcosinates, alkyl phosphates, alkyl ether phosphates, alkyl ether carboxylates, alpha-olefin sulphonates and acyl methyl taurates, especially their sodium, magnesium ammonium and mono-, di- and triethanolamine salts. The alkyl and acyl groups generally contain from 8 to 18 carbon atoms and may be unsaturated. The alkyl ether sulphates, alkyl ether phosphates and alkyl ether carboxylates may contain from one to 10 ethylene oxide or propylene oxide units per molecule, and preferably contain 2 to 3 ethylene oxide units per molecule. Examples of suitable anionic surfactants include sodium lauryl sulphate, sodium lauryl ether sulphate, ammonium lauryl sulphosuccinate, ammonium lauryl sulphate,ammonium lauryl ether sulphate, sodium dodecylbenzene sulphonate, triethanolamine dodecylbenzene sulphonate, sodium cocoyl isethionate, sodium lauroyl isethionate, and sodium N-lauryl sarcosinate.

Cationic surfactants suitable for use with the anionic polymers include quaternary ammonium surfactants of the formula X- N⁺R¹R²R³ where R¹, R², and R³ are independently selected from hydrogen, an aliphatic group of from about 1 to about 22 carbon atoms, or aromatic, aryl, an alkoxy, polyoxyalkylene, alkylamido, hydroxyalkyl, or alkylaryl group having from about 1 to about 22 carbon atoms; and X is an anion selected from halogen, acetate, phosphate, nitrate, sulfate, alkylsulfate radicals (e.g., methyl sulfate and ethyl sulfate), tosylate, lactate, citrate, and glycolate. The aliphatic groups may contain, in addition to carbon and hydrogen atoms, ether linkages, and other groups such as hydroxy or amino group substituents (e.g., the alkyl groups can contain polyethylene glycol and polypropylene glycol moieties). The longer chain aliphatic groups, e.g., those of about 12 carbons, or higher, can be saturated or unsaturated. More preferably, R¹ is an alkyl group having from about 12 to about 18 carbon atoms; R² is selected from H or an alkyl group having from about 1 to about 18 carbon atoms; R³ and R⁴ are independently selected from H or an alkyl group having from about 1 to about 3 carbon atoms; and X is as described above.

Suitable hydrophobic alcohols having 6-23 carbon atoms are linear or branched alkyl alcohols of the general formula C_{M}H_{2M+2-N}(OH)_{N}, where M is a number from 6-23, and N is 1 when M is 6-12, but where M is 13-23, N may be a number from 1 to 3. Our most preferred hydrophobic alcohol is lauryl alcohol, but any linear monohydroxy alcohol having 8-15 carbon atoms is also preferable to an alcohol with more or fewer carbon atoms.

By a gel promoter we mean a betaine, a sultaine or hydroxysultaine, or an amine oxide. Examples of betaines include the higher alkyl betaines such as coco dimethyl carboxymethyl betaine, lauryl dimethyl carboxymethyl betaine, lauryl dimethyl alphacarboxyethyl betaine, cetyl dimethyl carboxymethyl betaine, cetyl dimethyl betaine, lauryl bis-(2-hydroxyethyl) carboxymethyl betaine, oleyl dimethyl gamma-carboxypropyl betaine, lauryl bis-(2-hydroxypropyl)alphacarboxyethyl betaine, coco dimethyl sulfopropyl betaine, lauryl dimethyl sulfoethyl betaine, lauryl bis-(2-hydroxyethyl) sulfopropyl betaine, amidobetaines and amidosulfobetaines (wherein the RCONH(CH₂)₃ radical is attached to the nitrogen atom of the betaine, oleyl betaine, and cocamidopropyl betaine. Examples of sultaines and hydroxysultaines include materials such as cocamidopropyl hydroxysultaine.

By a Zeta potential having an absolute value of at least 20 we mean a Zeta potential having a value of +20 of higher or -20 or lower.

Amphoteric surfactants suitable for use with either cationic polymers or anionic polymers include those surfactants broadly described as derivatives of aliphatic secondary and tertiary amines in which the aliphatic radical can be straight or branched chain and wherein one of the aliphatic substituents contains from about 8 to about 18 carbon atoms and one contains an anionic water solubilizing group such as carboxy, sulfonate, sulfate, phosphate, or phosphonate. Suitable amphoteric surfactants include derivatives of aliphatic secondary and tertiary amines in which the aliphatic radical can be straight or branched chain and wherein one of the aliphatic aliphatic substituents contains from about 8 to about 18 carbon atoms and one contains an anionic water solubilizing group, e.g., carboxy, sulfonate, sulfate, phosphate, or phosphonate. Examples of compounds falling within this definition are sodium 3- dodecylaminopropionate, and sodium 3-dodecylaminopropane sulfonate.

Suitable amine oxides include cocoamidopropyl dimethyl amine oxide and other compounds of the formula R¹R²R³N→O wherein R³ is a hydrocarbyl or substituted hydrocarbyl having from about 8 to about 30 carbon atoms, and R¹ and R² are independently hydrogen, a hydrocarbyl or substituted hydrocarbyl having up to 30 carbon atoms. Preferably, R³ is an aliphatic or substituted aliphatic hydrocarbyl having at least about 12 and up to about 24 carbon atoms. More preferably R³ is an aliphatic group having at least about 12 carbon atoms and having up to about 22, and most preferably an aliphatic group having at least about 18 and no more than about 22 carbon atoms.

Compositions disclosed herein include aqueous gels comprising water and, by weight based on the water, (a) 0.1% to 5% by weight cationic polymer and (b) 0.01% to 2% by weight of an anionic surfactant, preferably a linear alkyl sulfate having from 8 to 22 carbon atoms, (c) 0.001 % to 5%, more preferably 0.001 % to 2%, and most preferably 0.001% to 0.5% by weight of a hydrophobic alcohol having from 6 to 23 carbon atoms, and an effective amount of a gel promoter, preferably within those classes of compounds (amphoteric surfactants and amine oxides) described above, the gel having a Zeta Potential absolute value of at least 20 millivolts and, preferably, a viscosity of at least 100 cps (centipoise, or mPa.s) as measured by a Brookfield Viscometer. A method is also disclosed herein of making a cationic polymer coacervate comprising forming a solution comprising at least 0.1% of a cationic polymer, adding to the solution at least one anionic surfactant in an amount by weight (a) less than the cationic polymer and (b) effective to obtain an absolute Zeta potential value of at least 20 millivolts and a viscosity of at least 100 cps (centipoise, or mPa.s) as measured by a Brookfield viscometer [Brookfield DVII; LV spindle set #4 @500rpm]. The process includes the addition of 0.001% to 5% or more of a hydrophobic alcohol having 6-23 carbon atoms; that is, preferably, a linear or branched alkyl alcohol of the general formula C_{M}H_{2M+2-N}(OH)_{N}, where M is a number from 6-23, and N is 1 when M is 6-12, but where M is 13-23, N may be a number from 1 to 3. Our most preferred hydrophobic alcohol is lauryl alcohol, but any linear monohydroxy alcohol having 8-15 carbon atoms is also preferable to an alcohol with more or fewer carbon atoms.

Where an anionic polymer is used, compositions disclosed herein include aqueous gels comprising water and, by weight based on the water, (a) 0.1% to 5% anionic polymer and (b) 0.1% to 2% of a cationic surfactant, preferably a quaternary ammonium compound having from 8 to 22 carbon atoms, the gel having a Zeta Potential absolute value of at least 20 millivolts and, preferably, a viscosity of at least 100 cps (centipoise, or mPa.s) as measured by a Brookfield Viscometer (see above for the conditions). Again, most preferably the alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3; the anionic polymer is preferably a homopolymer or copolymer (at least 20% by weight) of AMPSA.

A method is also disclosed herein of making an aqueous gel comprising adding to water 0.1% to 5%, based on the water, cationic polymer and a lesser amount but at least 0.01%, up to 4% or more, of an anionic surfactant having from 8 to 22 carbon atoms, in the presence of a linear or branched alkyl alcohol of the general formula C_{M}H_{2M+2-N}(OH)_{N}, where M is a number from 6-23, and N is 1 when M is 6-12, but where M is 13-23, N may be a number from 1 to 3, preferably in an amount from 0.001% to 5% by weight, the ratio of said cationic polymer to said anionic surfactant being effective to provide a Zeta Potential of at least 20. Preferably the polymer will be a homopolymer.

In addition, a method is disclosed herein of fracturing a subterranean formation comprising forming a gel or a coacervate as described herein and pumping the gel or coacervate down a wellbore, together with a proppant and under pressure sufficient to fracture the formation. Suitable proppants include all the generally used or generally accepted proppant materials such as sand, walnut shells, and other hard particulates. The gel may be used in the absence of conventional brine-forming salts. Aqueous based gels used for formation fracturing and other well treatment usually employ guar, cellulose, or gums that depend on chemical bonding and are shear-sensitive. The compositions can be easily pumped, yet will form strong gels when in use. Our compositions are not only easily pumped, but provide a friction reducing effect. In well drilling, our gel may be used, for example, in concentrations of 0.25% to 1% or more by weight whether or not foam is deliberately generated; for subterranean formation fracturing, somewhat higher concentrations may be desired - for example 0.75% to 1.5% gel or more by weight in the fracturing fluid (which will normally include a proppant) are useful. Our gel compositions are compatible with conventional drilling fluid and fracturing fluid compositions. Gel breakers may be employed with them, and in particular gel breaking may be accomplished by ordinary inorganic salts such as sodium chloride, lithium chloride, magnesium chloride or any other chloride or other salt such as a formate; also by benzoic acid, various bisulfites or polyether glycols ("Carboxax", for example) as is known in the art of gel breaking generally.

In order that the invention may be more fully understood, reference will now be made, by way of example, to the accompanying drawings, in which:
**Figure 1** plots the Zeta Potential of increasing concentrations of cationic polymer in aqueous solution with a constant amount of the anionic surfactant sodium lauryl sulfate.
**Figure 2** shows the effect of pH on Zeta Potential of a combination of cationic polymer and sodium lauryl sulfate at a particular ratio, a basic composition disclosed herein.
In **Figure 3**, the effect of a wide variance of pH on viscosity is shown as applied to the same basic composition of Figure 3.
**Figure 4** demonstrates the viscosity effects of small amounts of hexanol on a base composition.
**Figure 5** plots viscosity effects the inclusion of small amounts of octanol in a base composition.
**Figure 6** plots viscosity effects the inclusion of small amounts of lauryl alcohol in a base composition.
**Figure 7** shows the viscosity of our composition as a function of increasing concentrations of added betaine.
In **Figure 8**, an amine oxide was added to the base composition at various low concentrations to determine the effect on viscosity.
**Figures 9** and **10** show the thixotropicity and shear stability of a variation of our composition including three additives: a betaine, an amine oxide, and an alkyl alcohol.
**Figure 11** is a chart showing viscosity in a 1.1% solution of a composition embodying the invention, notably the "zero shear" viscosity.
**Figure 12** shows foam pipe rheometer results in test pipes (shear stress plotted against shear rate) of a basic gel at a constant test temperature.
**Figure 13** graphically illustrates the results of a laboratory test of the friction reduction effects of our compositions.

Although we prefer to use polymers of diallyl dimethyl ammonium chloride and particularly its homopolymers where cationic polymers are used, we may use any water soluble cationic polymer effective to viscosify water. Preferably the polymers will have a molecular weight of at least 10,000. Such polymers include homopolymers and copolymers made with cationic monomers (that is, at least 20% of the mer units contain cationic functional groups, while the balance may be nonfunctional or nonionic) such as diallyldimethylammonium chloride, methacrylamidopropyltrimethyl ammonium chloride, acryloyloloxyethyltrimethylammonium chloride, diallyl diethylammonium chloride, methacryloyoloxyethyltrimethyl ammonium chloride, vinyl pyridine, and vinyl benzyltrimethyl ammonium chloride.

The preferred anionic surfactant to be used with the cationic polymer is sodium lauryl sulfate, but any alkali metal alkyl sulfate or sulfonate having 8-22 carbon atoms may be used, and alkyl ether sulfates and sulfonates having 8-22 carbon atoms are included within our term "counterionic surfactant". Commercial forms of sodium lauryl sulfate including minor or even significant amounts of other similar surfactants may be used. Other common anionic surfactants may also be useful.

The alkyl alcohol is preferably a linear alkyl one having from 8 to 22 carbon atoms or, more preferably, 8-15 carbon atoms. Commercial forms of lauryl alcohol having other alcohols as a minor ingredient are satisfactory. We have found that some commercial forms of sodium lauryl sulfate contain lauryl alcohol in amounts sufficient to satisfy the lauryl alcohol requirements, and accordingly such sodium lauryl sulfates may sometimes be used as the anionic surfactant together with a cationic polymer, but without additional moieties of lauryl alcohol or other hydrophobic alcohol as described herein. We may substitute sodium lauryl ether sulfate for the sodium lauryl sulfate; lauryl alcohol should be added separately where this substitution is made.

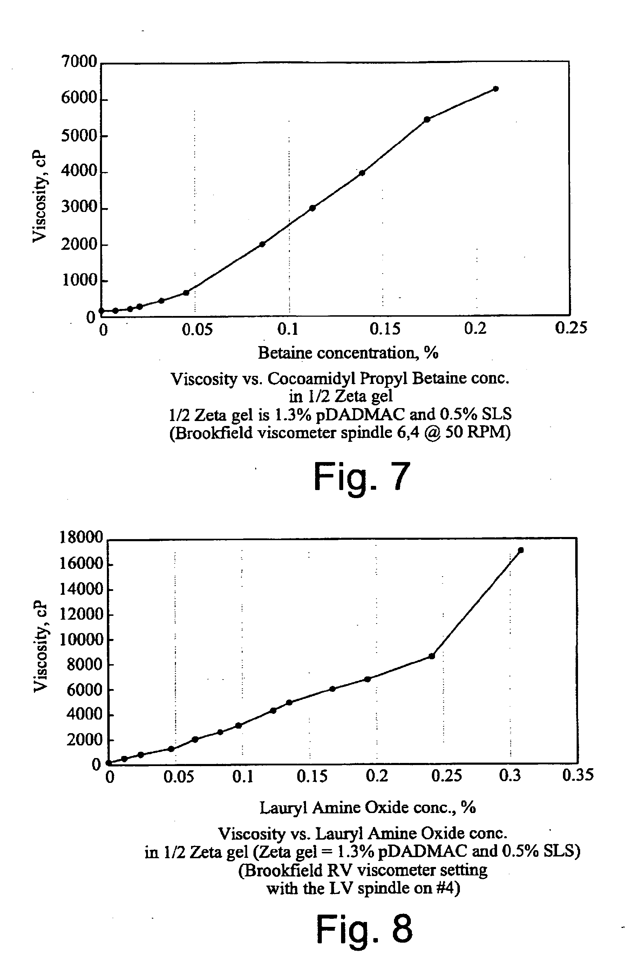

When used, the amine oxide promoter is preferably lauryl amine oxide, but we may use any amine oxide of the formula R¹R²R³NO, preferably R¹N(CH₃)₂O, where R¹ is an alkyl group of 8-22 carbon atoms, and R¹ and R² are independently alkyl groups having from 1 to 4 carbon atoms. We may use any amine oxide of the formula R¹R²R³N→O as defined by Dahayanake et al in US Patent 6,258,859. See also Tillotson US Patent 3,303,896 and Thompson US Patent 4,108,782 for their descriptions of amine oxides. Generally, up to 1% by weight may be used, but as will be seen in Figure 8, concentrations in the range of 0.1% to 0.4% may be quite sufficient for gel promotion.

When used, the amphoteric surfactant is preferably a betaine such as cocamidopropyl betaine, but we may use other types of amphoteric surfactants, including aminopropionate and sultaines. We may use any of the surfactant betaines listed or described by Sake et al in US Patent 6,284,230.

The weight ratio of cationic polymer to alkyl sulfate is generally 10:1 1 to 1.1:1, but the ratio may also be based on the molar ratio of cationic moieties on the polymer and the anionic sites on the surfactant.

Where an anionic polymer is used, we prefer to use a homopolymer of "AMPSA" - acrylamidomethylpropyl sulfonic acid - together with a common quatemery surfactant generally in the same ratios as recited above for cationic polymers and anionic surfactants, provided the absolute value of the Zeta Potential is at least 20. This may be done with or without gel promoters, but whare there are no gel promoters, the concentration of anionic polymer will be significantly higher than where a gel promoter is used.

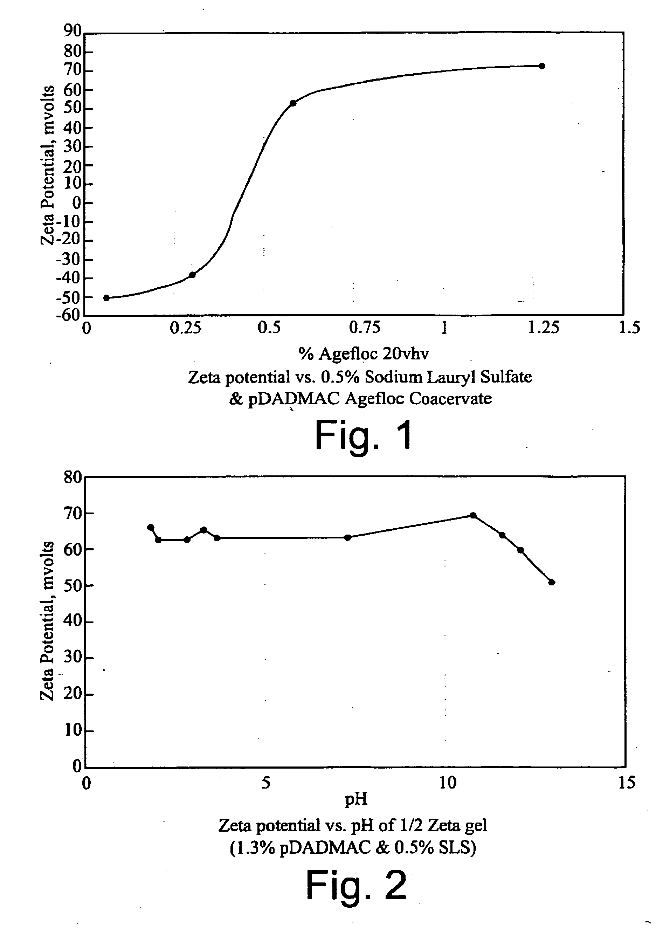

In **Figure 1**, the Zeta potential of combinations of increasing percentages of cationic polymer with 0.5% sodium lauryl sulfate is presented. As is known in the art, where the Zeta potential is 0, there is no stability to the suspension and the materials in question will drop out of an aqueous carrier. As seen in Figure 1, high and low ratios of cationic polymer to anionic surfactant have significant Zeta Potential readings, while the intermediate weight ratios of these particular materials have lower Zeta Potential readings. In Figure 1, the cationic polymer "Agefloc 20vhv" is a homopolymer of dimethyl diallyl ammonium chloride having an average molecular weight of 250,000; a 20% solution of poly diallyl dimethyl ammonium chloride homopolymer ("pDADMAC") was used. A coacervate is formed where the Zeta potential is either higher than +20 millivolts or "lower" than -20 millivolts, i.e. has an absolute value of at least 20. As used herein, the term absolute value means a positive or a negative number; thus a "Zeta Potential having an absolute value of at least 20 millivolts" includes either a positive or a negative value of the measurement in millivolts. While Figure 1 shows the weight percents of the ingredients, the relative charge densities of the polymer and the necessary amount of oppositely charged surfactant are important in determining the Zeta Potential.

**Figure 2** employs a composition, called "Zeta Gel" in this and other figures herein, comprising 1.3% Agefloc20vhv pDADMAC and 0.5% sodium lauryl sulfate, which provided the data point in **Figure 1** at about 68 millivolts. Figure 2 shows that the Zeta Potential of this composition is not significantly affected through a wide range of pH. For generating the data of Figure 2, potassium hydroxide was used to increase the pH and formic acid was used to decrease it. The term "1/2 Zeta Gel" means the Zeta Gel solution was diluted by 50%, providing a solution actually used of 1.3% cationic polymer and 0.5% anionic surfactant.

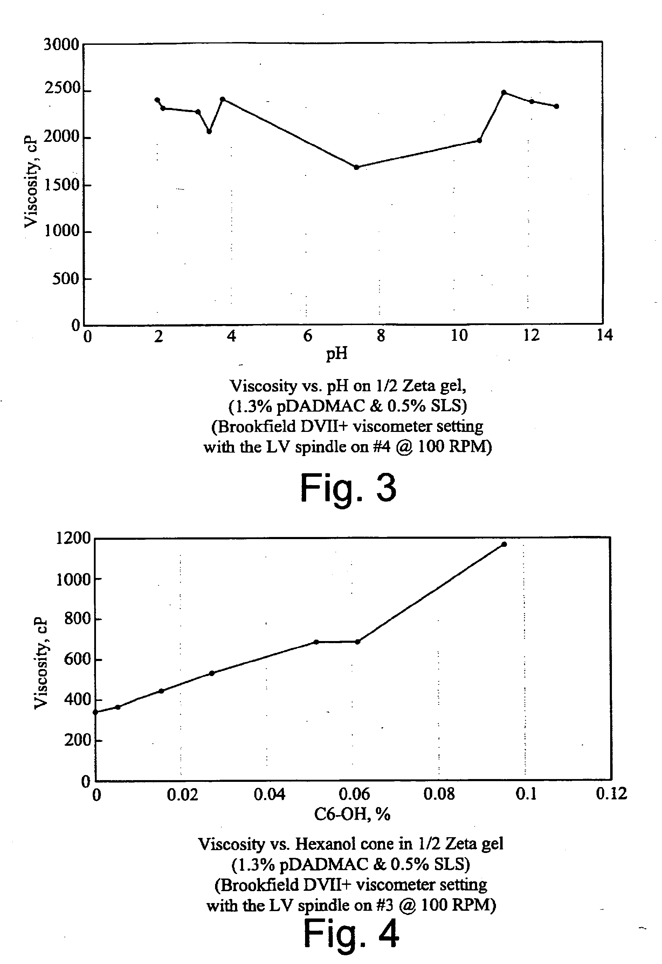

In **Figure 3**, the pH was varied in a composition similar to that of Figure 2 to determine the effect of pH on viscosity of the composition. While the viscosity is somewhat lower at pH 7 than for higher and lower pH's, it is otherwise not significantly affected by pH.

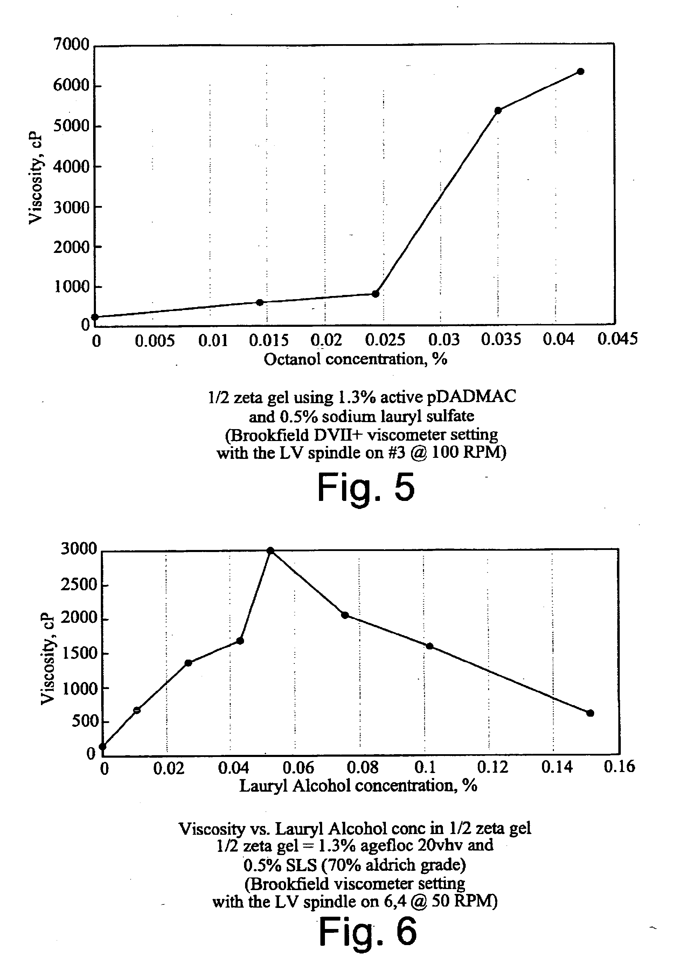

**Figures 4** and **5** are charts showing the viscosity of the composition used in Figures 2 and 3 when hexanol and octanol are used for the hydrophobic alcohol, respectively. For these pDADMAC and sodium lauryl sulfate concentrations and/or for this ratio of the ingredients, it is seen that the viscosities generally increase with increasing concentrations of the alcohol used.

In **Figure 6**, where lauryl alcohol is substituted for the hexanol and octanol of Figures 4 and 5, it is seen that the viscosity increases rapidly with increasing concentration of lauryl alcohol until about 0.05 percent; then decreases with increasing concentration. Persons skilled in the art may realize that this may provide a tool for manipulating the viscosity as required for various purposes.

**Figure 7** is a chart demonstrating that increasing concentration of betaine in the same basic composition of the previous figures will result in increasing viscosities. Similar curves (not shown) were obtained substituting the betaines "Mirataine CAB-A" (cocamidopropyl betaine), "Mirataine BB" (lauramidopropyl betaine), and "Mirataine CBS" (cocamidopropyl hydroxy sultaine) for the betaine of Figure 7.

Likewise, as shown in **Figure 8**, increasing concentrations of amine oxide will increase the viscosity of the base composition of cationic polymer and a selected smaller percentage of anionic surfactant.

Table 1 below shows the effect on viscosity of certain of our compositions with components in addition to polymer and surfactant.

**Table 1**

| SLS¹ | pDADMAC² | Am Ox³ | Betaine⁴ | Alcohol⁵ | Viscosity⁶ |
|---|---|---|---|---|---|
| 0.50% | 6.5%/1.3% | 0 | 0 | 0 | 200cP |
| 0.25% | 3.25%/0.65% | 0 | 0 | 0 | 20cP |
| 0.25% | 3.25%/0.65% | 0 | 0.35% | 0 | 900cP |
| 0.25% | 3.25%/0.65% | 0 | 0.35% | 0.025% | 3350cP |
| 0.25% | 3.25%/0.65% | 0.30% | 0.35% | 0.025% | 5500cP |

In Table 2, a different source of sodium lauryl sulfate is used for comparison, using all the other ingredients in the same concentrations as Table 1.

**Table 2**

| SLS¹ | pDADMAC² | Am Ox³ | Betaine⁴ | Alcohol⁵ | Viscosity⁶ |
|---|---|---|---|---|---|
| 0.50% | 6.5%/1.3% | 0 | 0 | 0 | 5700cP |
| 0.25% | 3.25%/0.65% | 0 | 0 | 0 | 60cP |
| 0.25% | 3.25%/0.65% | 0 | 0.35% | 0 | 3850cP |
| 0.25% | 3.25%/0.65% | 0 | 0.35% | 0.025% | 5000cP |
| 0.25% | 3.25%/0.65% | 0.30% | 0.35% | 0.025% | 6150cP |

Following is a key to the superscripts in Tables 1 and 2:
1. SLS = sodium lauryl sulfate. In Table 1, the SLS was 70% from Aldrich; in Table 2, it was Acmepon 95%. Values in the tables are in terms of pure SLS.
2. pDADMAC is poly(diallyldimethyl ammonium chloride) homopolymer having a average molecular weight of 250,000 in Table 1 and at least 400,000 in Table 2. In each case, it was used as a 20% solution; hence the percentage on the left in each cell of the tables is the amount of solution and the percentage on the right is the amount of neat pDADMAC.
3. Am Ox is a 40% solution of lauryl amine oxide, SHERREX 1770.
4. The betaine used in all cases was cocamidyopropyl betaine.
5. The alcohol was dodecanol, i.e. lauryl alcohol.
6. Viscosity is reported as centipoises (mPa.s) as measured on RTV Brookfield viscometer at 20 rpm using spindle #4 and at ambient temperature.

A comparison of the initial use of the sodium lauryl sulfate, at 0.5% in each case, shows a much higher viscosity achieved by the Acmepon product. We surmise that this is attributable to a higher percentage of lauryl alcohol impurity in the Acmepon product. Persons skilled in the art will perceive that the rest of the data are consistent with this assumption. The compositions including separately added lauryl alcohol yielded significantly higher viscosities than the remainder of those without such a separate addition.

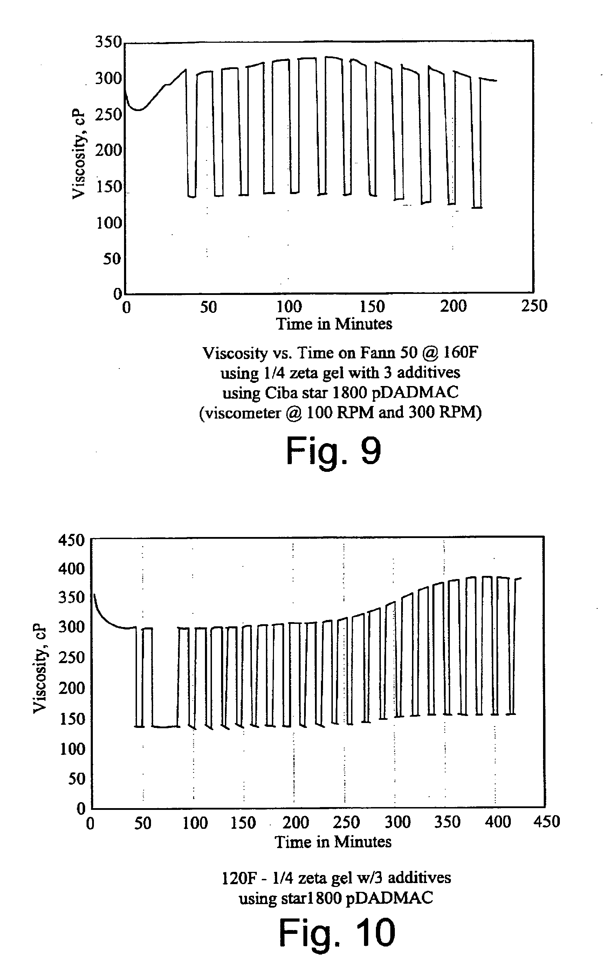

In **Figure 9**, the thermal and shear stability of a multiple ingredient gel is shown in terms of Fann viscosity. For this data collection, a gel of half the concentration of polymer and surfactant [called "1/4 Zeta Gel" on Figure 9] was used, compared to the charts of Figures 1-8. That is, the pDADMAC was 0.65% by weight (having a molecular weight of 400,000 to 500,000) and the sodium lauryl sulfate was at 0.25%. A 40% solution of amine oxide was used providing a 0.12% concentration, and the betaine was 30% active; the betaine was therefore 0.105% by weight, and the lauryl alcohol was at 0.025%. The "3 additives" are thus the amine oxide, the betaine, and the lauryl alcohol. The Brookfield viscometer was alternately run at 100 rpm (top data series) and 300 rpm (lower data series). As can be seen from the chart, only negligible shear deterioration is evidenced at 160°F (71°C) over a period of continuous alternate high and low shear. It is clear that our gel permits the use of quite low concentrations of polymer to achieve excellent viscosities and viscosity stabilities.

**Figure 10** shows similar alternating shear runs on the same composition as Figure 9 using a Fann 50 viscometer, this time at 120°F (49°C). The thixotropic nature of the coacervate gel is demonstrated again.

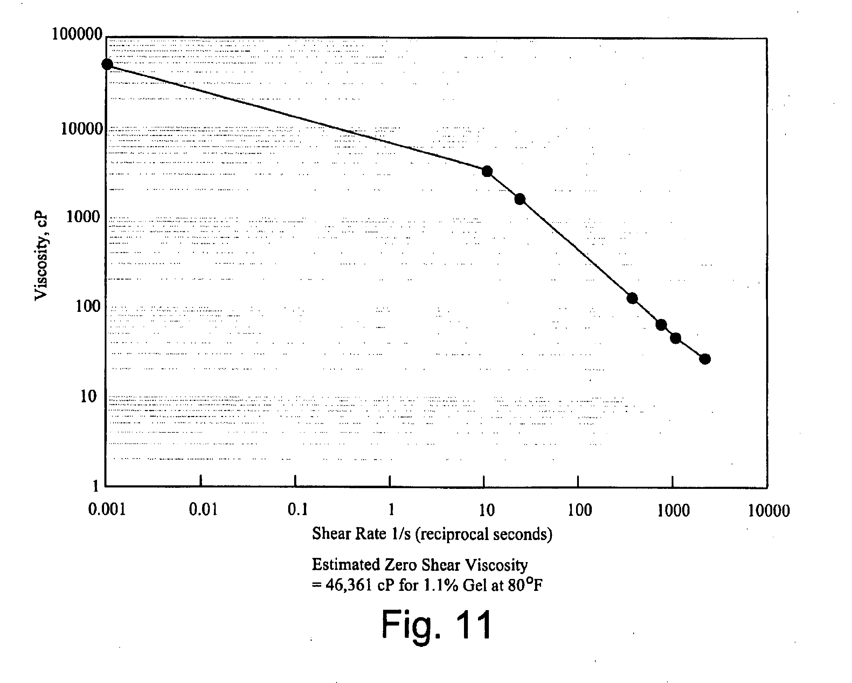

In **Figure 11**, shear rate in reciprocal seconds is plotted against viscosity in centipoise (mPa.s), leading to an extrapolated "zero shear viscosity" of 46,361 cp, an excellent viscosity reading series for a well fracturing fluid. See SPE 73755, *"Zero Shear Viscosity Determination of Fracturing Fluids: As Essential Parameter in Proppant Transport Characterizations"* by Mahmoud Asadi, SPE, Michael W. Conway, SPE Stim Lab Inc., and Robert D. Barree, SPE, Barree and Associates. Figure 11 is a nonlinear regression model following the procedure described by Asadi, Conway and Barree particularly with respect to Figures 5, 6, and 7 of that paper. As is known in the well fracturing art, in which a subterranean formation is fractured to facilitate the removal of hydrocarbons, it is necessary for the fluid first to transport the proppant to the fractures and then to suspend it for a useful period of time. The gelled fluid carrying the proppant is subject to wide ranges of shear depending, for example, on proximity to the fracture wall. Then, at rest, as the fractures are typically vertical, a dense, solid, propping agent has a tendency to sink in the fracturing fluid before it can be put to use, unless the fracturing fluid is able to suspend it. Accordingly, a projection of viscosity under zero shear, i.e. in which the fluid is substantially quiescent, provides highly significant information for the technician. In this case, the zero shear results are excellent, while results at other shear rates and temperatures are also excellent for pumpability and proppant transport. An embodiment of the present invention includes an aqueous gel comprising no more than 1% water soluble polymer having a zero shear viscosity of at least 45,000 following the zero shear viscosity extrapolation procedure of Asadi, Conway and Barree in SPE 73755.

The zero shear viscosity extrapolation of Figure 11 is reinforced by the results shown in the following tabulations, a rough settling rate test performed on our gel at 1.1% by weight active (the same gel as used for Figures 9, 10 and 11), containing 0.65% polymer). A 100 ml graduated cylinder is filled with a test gel made by mixing 10 ml (weighing 16g) of "20/40" proppant, a common commercial proppant of ceramic spheres, homogeneously dispersed in 100 ml of gel and maintained at 80°F (26.7 °C). Settling of the proppant in the cylinder was then observed at the intervals shown, recording the depth of the substantially clear gel from the top of the cylinder.

| Minutes: | 0 | 10 | 30 | 45 | 60 | 75 | 90 | 110 | 139 | 150 | 180 |
|---|---|---|---|---|---|---|---|---|---|---|---|
| Mm from top | 0 | 0 | 3.5 | 5 | 7 | 8 | 9.5 | 11 | 14.5 | 16 | 18 |

The result after 60 minutes, 7 millimeters of substantially clear gel, compares quite favorably with the settling rate, for example, of a Diesel gel which exhibited 16 ml of settling after 60 minutes. We refer to the above described settling rate test as a "10/100 20/40" settling rate test, meaning that a 20/40 proppant is used in a volume ratio of proppant to gel of 10/100 in a gel comprising 0.65% polymer. The depth of the upper layer of clear gel after 1 hour of settling provides a good rough comparison. Thus, an embodiment of the present invention includes an aqueous gel comprising no more than 1% by weight water soluble polymer, preferably no more than 0.7% by weight polymer, characterised by a "10/100 20/40" settling rate result at 60 minutes of no more than 8 millimeters, preferably no more than 7 millimeters.

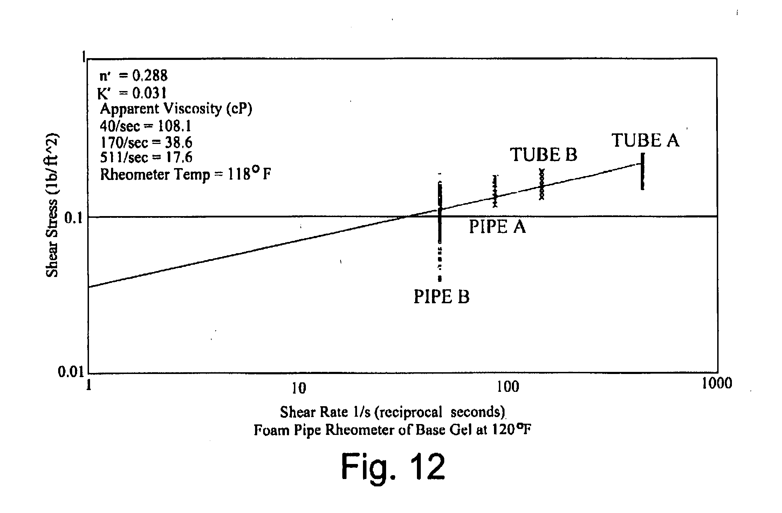

In **Figure 12**, test results are shown for a rheometric test performed on our base gel (1.3% polymer). Prior to testing, the base gel had Fann 35 viscosity readings, at 75°F (24°C) and a pH of 3.05, as follows:

| RPM | Reading |
|---|---|
| 3 | 6 |
| 6 | 8 |
| 100 | 20 |
| 200 | 25 |
| 300 | 30 |
| 600 | 40 |

Standard foam generating surfactants were used to simulate a foam system and nitrogen was used as the gas. The mixture was pumped through sand to generate a standard foam texture and, at 1200 ml/min, routed to each of four conduits designated Tube A, Tube B, Pipe A, and Pipe B. Tube A has an internal diameter of 0.30 inch (0.76 cm) and is 5.29 feet (1.61 m) long; tube B has an I.D of 0.45 inch (1.14 cm) and is 10.53 feet (3.21 m) long, pipe A has an I.D of 0.50 inch (1.27 cm) and is 14.29 inches (36.30 cm) long, and Pipe B has an I.D. of 0.61 inch (1.55 cm) and is 20.45 feet (6.23 m) long. Pressure drops across the lengths of the tubes and pipes are collected, temperatures are measured in the centers of the conduits. Viscosities are calculated and reported in Figure 12. Additional runs conducted with 25, 50, and 75 quality foams (reflecting the amount of nitrogen), revealed excellent half lives.

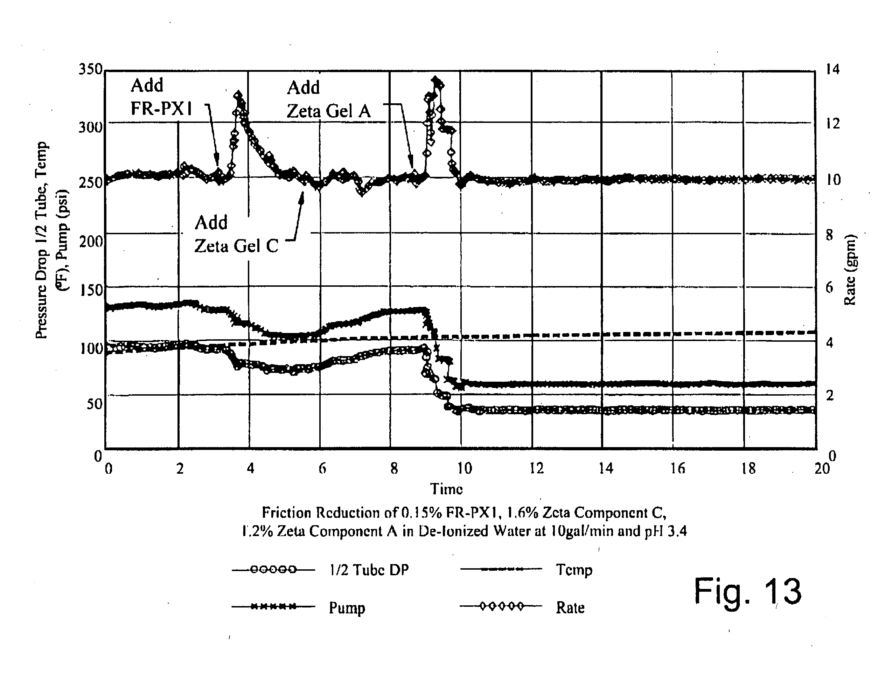

**Figure 13** illustrates the friction reduction effects of the disclosed compositions. As reviewed above and as is known in the art of formation fracturing in conjunction with well drilling for hydrocarbon recovery, significant savings in energy can be realized by converting the turbulent flow of the formation fracturing fluid through the well bore into laminar flow. Various water-soluble polymers have been used in the past to accomplish the conversion. We have found that the coacervate gel disclosed herein may be used together with a nonionic polymer to convert the turbulent flow of the fracturing fluid to a substantially laminar flow.

The plots of **Figure 13** were obtained using stainless steel tubing of 0.43 inch (1.09 cm) internal diameter, having a length of 57 feet (17.4 m), and equipped with an appropriate pump and pressure drop sensors. A flow rate of 10 gallons (37.9 1) per minute was established for water over a period of two minutes; then stepwise additions of 0.3% by weight acetic acid, 0.15% FR-PX-1 (a commercial polyethylene oxide polymer), 1.6% by weight of a preferred cationic component of our coacervate gel (polyDADMAC having a molecular weight of about 2,000,000, referred to in the caption as Zeta Component C), and 1.2% by weight of a preferred anionic component of our coacervate gel, sodium lauryl sulfonate, referred to in the caption of Figure 13 as Zeta Component A. At a flow rate of 10 gpm (37.9 lpm), the Reynolds number for plain water was 73,500, indicating fully turbulent flow. After each addition, the flow rate was re-adjusted to 10 gpm (37.9 lpm). The temperature increased slightly during the test. From the chart, persons skilled in the art will recognize that on the addition of Component A, there was a dramatic reduction in pressure, indicating an abrupt conversion from turbulent to laminar flow. The pressure achieved, 34.5 psi (237.9 kPa), represents a friction reduction of 64%, which was maintained for an additional ten minutes to the termination of the test.

A friction reducing composition is disclosed herein comprising a gel component and a nonionic polymer. The gel component is as described herein, and the nonionic polymer is preferably polyethylene oxide, but may be any water soluble polymer (including copolymers such as copolymers of ethylene oxide and propylene oxide) having a molecular weight of at least 1000 and capable of inhibiting turbulent flow in an aqueous fluid in a conduit. Such materials are hereafter called water soluble nonionic friction reducers; we intend to include natural and modified gums such as guar and its nonionic derivatives, hydroxyethyl cellulose and Xanthan gums having the friction reducing properties as well as polypropylene glycols and polyethylene glycols (hereafter called polyalkylene glycols), again having a molecular weight of at least 1000. A method is disclosed herein of conserving energy in subterranean formation fracturing comprising fracturing said subterranean formation using a fracturing fluid comprising (1) a water soluble nonionic friction reducer and (2) an aqueous gel comprising water and, by weight based on the water, (a) 0.1% to 5% of an anionic or cationic polymer, (b) a lesser amount but at least 0.01 % of a surfactant having from 8 to 22 carbon atoms and a charge opposite that of said polymer, (c) from 0.001 to 5% of a hydrophobic alcohol, (d) up to 5% of an amphoteric surfactant, and (e) up to 5% of an amine oxide, said gel having a Zeta Potential of an absolute value of at least 20 millivolts). The water soluble nonionic friction reducer (1) may be present in the fracturing fluid or other fluid for which the friction reduction is desired in a concentration from 0.0001% by weight to 1.0% by weight (or more ― as much as 5% or more if a friction reducing effect is still manifested); at the same time the gel component (2) is present in amount providing 0.1% to 5% of an anionic or cationic polymer with the other gel components as described herein. Preferably the water soluble nonionic friction reducer is polyethylene oxide of a molecular weight at least 5000, more preferably 10,000. Also preferably the water soluble nonionic friction reducer is present in a concentration of 0.1% to 0.3% by weight. Stated another way, the nonionic water soluble friction reducer is preferably present in a ratio to the anionic or cationic polymer of the gel in a weight ratio of 0.001:1 to 5:1. Proppants and other fracturing fluid constituents may be present in desired amounts.

An aqueous gel is disclosed comprising water and, by weight based on the water, (a) 0.1% to 5% of an anionic or cationic polymer, (b) a lesser amount but at least 0.01 % of a surfactant having from 8 to 22 carbon atoms and a charge opposite that of said polymer, (c) from 0.001 to 5% of a hydrophobic alcohol, (d) up to 5% of an amphoteric surfactant, and (e) up to 5% of an amine oxide, said gel having a Zeta Potential of an absolute value of at least 20 millivolts. A method is disclosed of making an aqueous gel comprising adding to water 0.1% to 5%, by weight based on the water, cationic polymer and a lesser amount but at least 0.01 % by weight of an anionic surfactant having from 8 to 22 carbon atoms, in the presence of 0.001% to 5% linear or branched alkyl alcohol of the general formula C_{M}H_{2M+2-N}(OH)_{N}, where M is a number from 6-23, and N is 1 when M is 6-12, but where M is 13-23, N may be a number from 1 to 3, and optionally in the presence of at least one of (a) up to 5% by weight amphoteric surfactant and (b) up to 5% by weight amine oxide, the ratio of the cationic polymer to the anionic surfactant being effective to provide a Zeta Potential having an absolute value of at least 20 millivolts. Further, an embodiment of the present invention includes an aqueous gel comprising a polymer in an amount no greater than 1% by weight in water, characterised by a "10/100 20/40" settling rate result at 60 minutes of no more than 8 millimeters, preferably no more than 7 millimeters. An embodiment of the present invention includes an aqueous gel comprising no more than 1%, preferably no more than 0.7%, water soluble polymer, the gel having a zero shear viscosity of at least 45,000 following the zero shear viscosity extrapolation procedure of Asadi, Conway and Barree in SPE 73755 or, expressed another way, characterised by a "10/100 20/40" settling rate result at 60 minutes of no more than 8 millimeters, preferably no more than 7 millimeters.

## Claims

1. An aqueous gel **characterised by** comprising: a water-soluble polymer in an amount no greater than 1% by weight; an anionic surfactant; and a hydrophobic alcohol in an amount between 0.001% and 5% by weight; wherein the gel has at least one of (a) a zero shear viscosity of at least 45,000 at 80°F (26.7 °C) following the zero shear viscosity extrapolation procedure of Asadi, Conway and Barree in SPE 73755 or (b) a "10/100 20/40" settling rate result at 60 minutes of no more than 8 millimeters at 80°F (26.7 °C).

2. An aqueous gel of claim 1, wherein said water-soluble polymer is cationic and is present in said gel in an amount no greater than 0.7% by weight.

3. An aqueous gel of claim 1 or 2, wherein said anionic surfactant is in an amount less than that of said polymer.

4. An aqueous gel of claim 1, 2 or 3, wherein the water soluble polymer comprises mer units derived from diallyldimethylammonium chloride.

5. An aqueous gel of any preceding claim, wherein said anionic surfactant comprises sodium lauryl sulfate.

6. An aqueous gel of any preceding claim, wherein said hydrophobic alcohol comprises a linear monohydroxy alcohol having from 8 to 15 carbon atoms.

7. An aqueous gel of any preceding claim, wherein said water-soluble polymer comprises a cationic polymer and the hydrophobic alcohol comprises a linear or branched alkyl alcohol of the general formula C_{M}H_{2M+2-N}(OH)_{N}, where M is a number from 6 to 23, and N is 1 when M is 6 to 12, but where M is 13 to 23, N may be a number from 1 to 3.

8. A well treatment fluid comprising a proppant and a gel of any preceding claim.

9. Method of separating two portions of fluid for movement in a pipe **characterised by** comprising placing between said portions of fluid in said pipe an aqueous gel separating pig comprising: a water-soluble polymer in an amount no greater than 1% by weight; an anionic surfactant; and a hydrophobic alcohol in an amount between 0.001 % and 5% by weight; wherein the gel has at least one of (a) a zero shear viscosity of at least 45,000 at 80°F (26.7 °C) following the zero shear viscosity extrapolation procedure of Asadi, Conway and Barree in SPE 73755 or (b) a "10/100 20/40" settling rate result at 60 minutes of no more than 8 millimeters at 80°F (26.7 °C).

10. Method of claim 9 including forming an isolated segment of at least one of said portions of fluid by placing an additional aqueous gel pig in said pipe a desired distance from said separating pig, said additional aqueous gel pig comprising: a water-soluble polymer in an amount no greater than 1% by weight; an anionic surfactant; and a hydrophobic alcohol in an amount between 0.001% and 5% by weight; wherein the gel has at least one of (a) a zero shear viscosity of at least 45,000 at 80°F (26.7 °C) following the zero shear viscosity extrapolation procedure of Asadi, Conway and Barree in SPE 73755 or (b) a "10/100 20/40" settling rate result at 60 minutes of no more than 8 millimeters at 80°F (26.7 °C).

11. Method of claim 9 wherein at least one of said portions of fluid is a cleaning fluid.

12. Method of claim 9 wherein at least one of said portions of fluid is a drying fluid.

13. Method of claim 9 wherein at least one of said portions of fluid is a well cementing fluid.

14. Method of claim 9 wherein at least one of said portions of fluid is a hydrocarbon fluid.

15. Method of claim 9 wherein one of said portions of fluid is a gas and the other of said portions of fluid is a liquid.

16. Method of claim 9 further including moving said portions of fluid through said pipe.

17. Method of claim 10 further including moving said isolated segment of fluid through said pipe.

## Patentansprüche

1. Wässriges Gel, **dadurch gekennzeichnet, dass** es aufweist: ein wasserlösliches Polymer in einer Menge von nicht mehr als 1 Gewichtsprozent; ein anionisches Tensid und einen hydrophoben Alkohol in einer Menge zwischen 0,001% und 5 Gewichtsprozent, wobei das Gel mindestens eines der folgenden aufweist: (a) eine Null-Scherviskosität von mindestens 45.000 bei 26,7°C (80°F) nach der Prozedur der Extrapolation der Null-Scherviskosität von Asadi, Conway und Barree in SPE 73755 oder (b) ein Ergebnis von "10/100 20/40"-Absetzgeschwindigkeit bei 60 Minuten von nicht mehr als 8 Millimeter bei 26,7°C (80°F).

2. Wässriges Gel nach Anspruch 1, wobei das wasserlösliche Polymer kationisch ist und in dem Gel in einer Menge von nicht mehr als 0,7 Gewichtsprozent vorliegt.

3. Wässriges Gel nach Anspruch 1 oder 2, wobei das anionische Tensid in einer Menge vorliegt, die geringer als diejenige des Polymers ist.

4. Wässriges Gel nach Anspruch 1, 2 oder 3, wobei das wasserlösliche Polymer Monomereinheiten aufweist, die abgeleitet sind von Diallyldimethylammoniumchlorid.

5. Wässriges Gel nach einem der vorhergehenden Ansprüche, wobei das anionische Tensid Natriumlaurylsulfat aufweist.

6. Wässriges Gel nach einem der vorhergehenden Ansprüche, wobei der hydrophobe Alkohol einen geradkettigen Monohydroxyalkohol aufweist, der 8 bis 15 Kohlenstoffatome hat.

7. Wässriges Gel nach einem der vorhergehenden Ansprüche, wobei das wasserlösliche Polymer ein kationisches Polymer aufweist und der hydrophobe Alkohol einen geradkettigen oder verzweigten Alkylalkohol der allgemeinen Formel C_{M}H_{2M+2-N}(OH)_{N} aufweist, worin M eine Zahl von 6 bis 23 ist und N 1 ist, wenn M 6 bis 12 beträgt; wobei jedoch, wenn M 13 bis 23 beträgt, N eine Zahl von 1 bis 3 sein kann.

8. Fluid zur Bohrlochbehandlung, aufweisend ein Stützmittel und ein Gel nach einem der vorhergehenden Ansprüche.

9. Verfahren zum Trennen zweier Teile von Fluid zur Bewegung in einer Rohrleitung, **dadurch gekennzeichnet, dass** das Verfahren umfasst: zwischen den Teilen des Fluids in der Rohrleitung einen separierenden Molch aus wässerigem Gel einbringen, wobei das Gel aufweist: ein wasserlösliches Polymer in einer Menge von nicht mehr als 1 Gewichtsprozent; ein anionisches Tensid und einen hydrophoben Alkohol in einer Menge zwischen 0,001% und 5 Gewichtsprozent, wobei das Gel mindestens eines der folgenden aufweist: (a) eine Null-Scherviskosität von mindestens 45.000 bei 26,7°C (80°F) nach der Prozedur der Extrapolation der Null-Scherviskosität von Asadi, Conway und Barree in SPE 73755 oder (b) ein Ergebnis von "10/100 20/40"-Absetzgeschwindigkeit bei 60 Minuten von nicht mehr als 8 Millimeter bei 26,7°C (80°F).

10. Verfahren nach Anspruch 9, einschließend das Erzeugen eines isolierten Segments von mindestens einem der Teile des Fluids, indem in die Rohrleitung einen zusätzlichen Molch aus wässerigem Gel in einem gewünschten Abstand von dem separierenden Molch eingebracht wird, wobei der zusätzliche Molch aus wässerigem Gel aufweist: ein wasserlösliches Polymer in einer Menge von nicht mehr als 1 Gewichtsprozent; ein anionisches Tensid und einen hydrophoben Alkohol in einer Menge zwischen 0,001% und 5 Gewichtsprozent, wobei das Gel mindestens eines der folgenden aufweist: (a) eine Null-Scherviskosität von mindestens 45.000 bei 26,7°C (80°F) nach der Prozedur der Extrapolation der Null-Scherviskosität von Asadi, Conway und Barree in SPE 73755 oder (b) ein Ergebnis von "10/100 20/40"-Absetzgeschwindigkeit bei 60 Minuten von nicht mehr als 8 Millimeter bei 26,7°C (80°F).

11. Verfahren nach Anspruch 9, wobei mindestens einer der Teile des Fluids ein reinigendes Fluid ist.

12. Verfahren nach Anspruch 9, wobei mindestens einer der Teile des Fluids ein trocknendes Fluid ist.

13. Verfahren nach Anspruch 9, wobei mindestens einer der Teile des Fluids ein das Bohrloch zementierendes Fluid ist.

14. Verfahren nach Anspruch 9, wobei mindestens einer der Teile des Fluids ein Kohlenwasserstoff Fluid ist.

15. Verfahren nach Anspruch 9, wobei einer der Teile des Fluids ein Gas ist und der andere der Teile des Fluids eine Flüssigkeit ist.

16. Verfahren nach Anspruch 9, ferner einschließend das Befördern der Teile des Fluids durch die Rohrleitung.

17. Verfahren nach Anspruch 10, ferner einschließend das Befördern des isolierten Segments des Fluids durch die Rohrleitung.

## Revendications

1. Gel aqueux **caractérisé par** le fait de comprendre: un polymère soluble dans l'eau dans une quantité de pas plus de 1% en poids; un tensioactif anionique; et un alcool hydrophobe dans une quantité d'entre 0,001% et 5% en poids; où le gel possède au moins une propriété parmi (a) une viscosité à cisaillement nul d'au moins 45.000 à 80°F (26,7°C) en suivant la procédure d'extrapolation de la viscosité à cisaillement nul de Asadi, Conway et Barree dans SPE 73755 ou (b) un résultat de taux de sédimentation « 10/100 20/40 » à 60 minutes de pas plus de 8 millimètres à 80°F (26,7°C).

2. Gel aqueux suivant la revendication 1, dans lequel ledit polymère soluble dans l'eau est cationique et il est présent dans ledit gel dans une quantité de pas plus de 0,7% en poids.

3. Gel aqueux suivant la revendication 1 ou 2, dans lequel ledit tensioactif anionique est dans une quantité inférieure à celle dudit polymère.

4. Gel aqueux suivant la revendication 1, 2 ou 3, dans lequel le polymère soluble dans l'eau comprend des unités monomères dérivées du chlorure de diallyldiméthylammonium.

5. Gel aqueux suivant l'une quelconque des revendications précédentes, dans lequel ledit tensioactif anionique comprend du sulfate de lauryle de sodium.

6. Gel aqueux suivant l'une quelconque des revendications précédentes, dans lequel ledit alcool hydrophobe comprend un alcool monohydroxy linéaire possédant de 8 à 15 atomes de carbone.

7. Gel aqueux suivant l'une quelconque des revendications précédentes, dans lequel ledit polymère soluble dans l'eau comprend un polymère cationique et l'alcool hydrophobe comprend un alcool d'alkyle linéaire ou ramifié de la formule générale C_{M}H_{2M+2-N}(OH)_{N}, où M est un nombre de 6 à 23, et N est 1 lorsque M est de 6 à 12, mais lorsque M est de 13 à 23, N peut être un nombre de 1 à 3.

8. Fluide de traitement de puits comprenant un agent de soutènement et un gel suivant l'une quelconque des revendications précédentes.

9. Procédé pour la séparation de deux portions de fluide pour un mouvement dans un tuyau **caractérisé par** le fait de comprendre le placement entre lesdites portions de fluide dans ledit tuyau d'un racleur de séparation de gel aqueux comprenant: un polymère soluble dans l'eau dans une quantité de pas plus de 1% en poids; un tensioactif anionique; et un alcool hydrophobe dans une quantité d'entre 0,001% et 5% en poids; où le gel possède au moins une propriété parmi (a) une viscosité à cisaillement nul d'au moins 45.000 à 80°F (26,7°C) en suivant la procédure d'extrapolation de la viscosité à cisaillement nul de Asadi, Conway et Barree dans SPE 73755 ou (b) un résultat de taux de sédimentation « 10/100 20/40 » à 60 minutes de pas plus de 8 millimètres à 80°F (26,7°C).

10. Procédé suivant la revendication 9, incluant la formation d'un segment isolé d'au moins une desdites portions de fluide en plaçant un racleur de gel aqueux supplémentaire dans ledit tuyau à une distance désirée depuis ledit racleur de séparation, ledit racleur de gel aqueux supplémentaire comprenant: un polymère soluble dans l'eau dans une quantité de pas plus de 1% en poids; un tensioactif anionique; et un alcool hydrophobe dans une quantité d'entre 0,001% et 5% en poids; où le gel possède au moins une propriété parmi (a) une viscosité à cisaillement nul d'au moins 45.000 à 80°F (26,7°C) en suivant la procédure d'extrapolation de la viscosité à cisaillement nul de Asadi, Conway et Barree dans SPE 73755 ou (b) un résultat de taux de sédimentation « 10/100 20/40 » à 60 minutes de pas plus de 8 millimètres à 80°F (26,7°C).

11. Procédé suivant la revendication 9, dans lequel au moins une desdites portions de fluide est un fluide nettoyant.

12. Procédé suivant la revendication 9, dans lequel au moins une desdites portions de fluide est un fluide séchant.

13. Procédé suivant la revendication 9, dans lequel au moins une desdites portions de fluide est un fluide de cimentation de puits.

14. Procédé suivant la revendication 9, dans lequel au moins une desdites portions de fluide est un fluide hydrocarbure.

15. Procédé suivant la revendication 9, dans lequel au moins une desdites portions de fluide est un gaz et l'autre desdites portions de fluide est un liquide.

16. Procédé suivant la revendication 9, incluant en outre le déplacement desdites portions de fluide à travers ledit tuyau.

17. Procédé suivant la revendication 10, incluant en outre le déplacement dudit segment isolé de fluide à travers ledit tuyau.
